# EUROPEAN PATENT APPLICATION

(11) **EP 2 842 741 A1**
(43) Date of publication of application: **04.03.2015**
(21) Application number: 13782348.0
(22) Date of filing: 25.04.2013
(51) Int. Cl.: B32B 27/18, H01M 4/88, H01M 4/96, H01M 8/02, H01M 8/10, H01M 12/06, H01M 12/08

(54) **LAMINATE BODY AND METHOD FOR MANUFACTURING SAME**

(30) Priority: 25.04.2012 JP 2012099758
(71) Applicant: Dai Nippon Printing Co., Ltd., Tokyo 162-8001 (JP)
(72) Inventor: OI, Kasumi, Tokyo 162-8001 (JP); TAKEUCHI, Naoya, Tokyo 162-8001 (JP); KISHIMOTO, Hiroshi, Tokyo 162-8001 (JP); OHTANI, Hitoshi, Tokyo 162-8001 (JP)
(74) Representative: Vossius & Partner
(86) International application number: PCT/JP2013/062302
(87) International publication number: WO 2013/161971

(57) **Abstract**

An object of the present invention is to provide a laminate having food adhesion between a support and a conductive layer.

The laminate of the present invention comprises a conductive layer A formed on a support, the conductive layer A containing a conductive carbon material and a polymer, the polymer in the conductive layer A being dense at the surface in contact with the support.

## Description

### Technical Field

The present invention relates to a laminate and a production method thereof.

### Background Art

Electrochemical cells, such as fuel cells and metal-air batteries, which use gas in an electrode reaction, are provided with a conductive porous layer to improve the battery performance thereof.

The membrane-electrode assembly (MEA) used as a component of a solid polymer fuel cell has a structure wherein a conductive porous layer, a catalyst layer, an ion-conductive solid polymer electrolyte membrane, a catalyst layer, and a conductive porous layer are sequentially laminated.

This conductive porous layer is generally formed by using a conductive porous substrate, such as carbon paper or carbon cloth. To enhance the conductivity, gas diffusivity, gas permeability, smoothness, water control properties, such as water drainability and water retainability, etc., of the conductive porous substrate, a conductive layer comprising conductive carbon particles, a water-repellent resin, etc., may be further formed on a conductive porous substrate, which is used as a support.

Conventional conductive porous layers are formed by applying a conductive layer-forming paste composition to a conductive porous substrate having a surface roughness of about tens of µm, such as carbon paper or carbon cloth, and then drying (for application methods, see Patent Literature (PTL) 1 and 2). Therefore, due to the penetration of the paste composition into the conductive porous substrate surface, etc., it was difficult to form a conductive layer with a uniform thickness. When the film thickness of the conductive layer is not uniform as described above, that is, when there is variation in the film thickness of the conductive layer, stable permeation and diffusion of gas over the adjacent catalyst layer surface is impossible, which lowers fuel cell performance.

Another method for producing a conductive porous layer comprises forming a conductive layer on a transfer film, then pressure-welding the conductive layer onto the conductive porous substrate and removing the transfer film, by a transfer method. However, compared to the above application methods, this method is insufficient in terms of adhesion between the conductive porous substrate and the conductive layer, leaving room for improvement in battery performance, etc. Further, when the conductive layer is directly laminated on a support, e.g., a separator without using the conductive porous substrate, adhesion between the separator and the conductive layer is insufficient, leaving room for improvement in battery performance, etc.

### Citation List

### Patent Literature

PTL 1: JP2006-278037A
PTL 2: JP2006-339018A

### Summary of Invention

### Technical Problem

An object of the present invention is to provide a laminate having good adhesion between a support and a conductive layer.

### Solution to Problem

In view of the above problems, the prevent inventors carried out extensive research to impart excellent adhesion between a support and a conductive layer. As a result, the inventors found that a laminate that can solve the above problems can be provided by using a specific conductive layer. Specifically, we found that a laminate having an improved adhesion between a conductive layer and a support can be produced when a polymer contained in the conductive layer having gas diffusivity and gas permeability is present with a higher density at the surface in contact with the support than at the opposite side surface thereof. The present invention was accomplished based on this finding.

That is, the present invention relates to the laminate and production method thereof shown in Items 1 to 8 below.
Item 1. A laminate comprising a conductive layer A formed on a support,
   the conductive layer A containing a conductive carbon material and a polymer,
   the polymer in the conductive layer A being dense at the surface in contact with the support.
Item 1-1. The laminate according to Item 1, wherein the conductive layer A has gas diffusivity and/or gas permeability.
Item 1-2. The laminate according to Item 1 or 1-1, wherein the polymer in the conductive layer A is present with a higher density at the surface in contact with the support than at the opposite side surface thereof.
Item 1-3. The laminate according to any one of Items 1 to 1-2, wherein the conductive layer A satisfies at least one of the following conditions:
   (1) the surface in contact with the support has a fluorine atom content 1 atm% or more larger than at the opposite side surface thereof,
   (2) the surface in contact with the support has an oxygen atom content 1 atm% or more larger than at the opposite side surface thereof, and
   (3) the surface in contact with the support has a nitrogen atom content 1 atm% or more larger than at the opposite side surface thereof.
Item 2. A laminate comprising a conductive layer B formed on the surface of the conductive layer A opposite to the surface of the support side of the conductive layer A in the laminate according to Item 1, the conductive layer B containing a conductive carbon material and a polymer.
Item 2-1. The laminate according to Item 2, wherein the conductive layer B has gas diffusivity and/or gas permeability.
Item 3. The laminate according to any one of Items 1 to 2-1, wherein the support is a separator or a conductive porous substrate.
Item 4. The laminate according to any one of Items 1 to 3, wherein the separator comprises at least one member selected from the group consisting of metals such as stainless steel, copper, titanium, aluminum, rhodium, tantalum, and tungsten, or alloys including at least one member of the metals; graphite; and carbon compounds in which carbon is added into resin, and
   the conductive porous substrate is carbon paper, carbon cloth, or carbon felt.
Item 5. The laminate according to any one of Items 2 to 4 satisfying one of the following conditions (A) and (B):
   (A) the polymer in the conductive layer B is present with a higher density at the surface not in contact with the conductive layer A than at the surface in contact with the conductive layer A, and
   (B) the polymer in the conductive layer B is present with a higher density at the surface in contact with the conductive layer A than at the surface not in contact with the conductive layer A.
Item 5-1. A method for producing a laminate comprising a conductive layer A formed on a support, comprising a step of producing the conductive layer A using a conductive layer A-forming paste composition containing a conductive carbon material and a polymer,
   the polymer in the conductive layer A being dense at the surface in contact with the support.
Item 6. A method for producing a laminate comprising a conductive layer A having gas diffusivity and/or gas permeability formed on a support, the method comprising the steps of:
   (I) applying a conductive layer A-forming paste composition containing a conductive carbon material and a polymer to a substrate, and drying the composition to produce the conductive layer A having a polymer with a higher density at the surface of the substrate side than at the surface not in contact with the substrate, and
   (II) detaching the conductive layer A produced in (I) above from the substrate, disposing the conductive layer A on the support in a manner such that the polymer contained in the conductive layer A is present with a higher density at the surface in contact with the support than at the opposite side surface thereof, and bonding the conductive layer A and the support.
Item 7. A method for producing a laminate comprising a support, a conductive layer A having gas diffusivity and/or gas permeability, and a conductive layer B having gas diffusivity and/or gas permeability, the conductive layer A being formed on the support, and the conductive layer B being formed on the conductive layer A,
   the method comprising the steps of:
   (I) applying a conductive layer A-forming paste composition containing a conductive carbon material and a polymer to a substrate, and drying the composition to produce the conductive layer A having a polymer with a higher density at the surface of the substrate side than at the surface not in contact with the substrate, ,
   (I') applying a conductive layer B-forming paste composition containing a conductive carbon material and a polymer to a substrate, and drying the composition to produce the conductive layer B,
   (II') detaching the conductive layer A produced in (I) above from the substrate, and disposing the conductive layer A on the support in a manner such that the polymer contained in the conductive layer A is present with a higher density at the surface in contact with the support than at the opposite side surface thereof,
   (III) detaching the conductive layer B produced in (I') above from the substrate, and disposing the conductive layer B on the conductive layer A, and
   (IV) bonding the support, conductive layer A, and conductive layer B.
Item 8. A membrane-electrode assembly for batteries comprising a catalyst layer laminated membrane and at least one laminate according to any one of Items 1 to 1-2,
   the catalyst layer laminated membrane comprising a catalyst layer, an electrolyte membrane, and a catalyst layer that are sequentially laminated,
   the laminate being disposed on one side or both sides of the catalyst layer laminated membrane,
   the laminate being stacked on the catalyst layer laminated membrane in a manner such that the conductive layer A is in contact with the catalyst layer.
Item 9. A membrane-electrode assembly for batteries comprising a catalyst layer laminated membrane and at least one laminate according to any one of Items 2 to 5,
   the catalyst layer laminated membrane comprising a catalyst layer, an electrolyte membrane, and a catalyst layer that are sequentially laminated,
   the laminate being disposed on one side or both sides of the catalyst layer laminated membrane,
   the laminate being stacked on the catalyst layer laminated membrane in a manner such that the conductive layer B is in contact with the catalyst layer.
Item 10. A cell comprising the membrane-electrode assembly for batteries according to Item 8 or 9.

### 1. Laminate

The laminate of the present invention comprises a conductive layer A formed on a support. The conductive layer A contains a conductive carbon material and a polymer.

The present invention has a feature in that the polymer in the conductive layer A is present with a higher density at the surface in contact with the support than at the opposite side surface thereof. Since the polymer in the conductive layer A is present with a higher density at the surface in contact with the support than at the opposite side surface thereof, adhesion between the support and the conductive layer is remarkably improved. When the polymer is present with high density at both surfaces of the conductive layer A, i.e., at the surface in contact with the support and the opposite side surface thereof, and the densities are the same, adhesion between the support and the conductive layer can be improved; however, gas diffusivity and electrical resistance are reduced. Accordingly, in one example of the present invention, when the polymer, which is present with a higher density at one surface of the conductive layer A than at the opposite side surface thereof, includes a fluorine atom, the fluorine atom content at the surface in contact with the support is preferably 1 atm% or more, and more preferably 2 atm% or more larger than the fluorine atom content at the opposite side surface thereof. The upper limit of the difference in fluorine atom content is not particularly limited, but is typically about 20 atm%. The fluorine atom content in the surface of the conductive layer A is measured using energy-dispersive X-ray fluorescence spectrometry.

### <Conductive Layer A>

The conductive layer A contains a conductive carbon material and a polymer. Although the thickness of the conductive layer A is not limited, the preferable thickness is typically about 1 µm to 300 µm, and particularly preferably about 50 µm to 250 µm. In the present invention, use of the conductive layer A can form a laminate having more excellent gas permeability and gas diffusivity.

### 1. Conductive Carbon Material

Examples of conductive carbon materials include, but are not limited to, conductive carbon particles, conductive carbon fibers, and the like.

### [Conductive Carbon Particles]

Any carbon material that is conductive may be used as conductive carbon particles, and known or commercially available materials can be used. Examples of such conductive carbon particles include carbon blacks, such as channel black, furnace black, ketjen black, acetylene black, and lamp black; graphite; active charcoal; and the like. Such conductive carbon particles can be used singly, or in a combination of two or more. The incorporation of such conductive carbon particles can enhance the conductivity of the laminate.

The average particle diameter (arithmetic average particle diameter) of the conductive carbon particles is not limited, and is typically 5 nm to 100 µm. To increase the relatively pore volume and impart gas permeability, smoothness, and water control properties such as water drainability and retainability to the conductive layer A, the preferable average particle diameter is typically about 5 nm to 200 nm, and particularly preferably about 5 nm to 100 nm. To impart gas diffusivity to the conductive layer A, the preferable average is about 5 µm to 100 µm, and particularly preferably about 6 µm to 80 µm.

When a carbon black is used as conductive carbon particles, the average particle diameter (arithmetic average particle diameter) of the carbon black is not limited. The preferable average particle diameter thereof is typically about 5 nm to 200 nm, and particularly preferably about 5 nm to 100 nm. When a carbon black aggregate is used, the preferable average particle diameter thereof is about 10 to 600 nm, and particularly preferably about 50 to 500 nm. When graphite, active charcoal, or the like is used, the preferable average particle diameter thereof is about 500 nm to 100 µm, and particularly preferably about 1 µm to 80 µm. The average particle diameter of the conductive carbon particles is measured by an LA-920 particle size distribution analyzer, produced by Horiba, Ltd.

### [Conductive Carbon Fibers]

Incorporation of conductive carbon fibers can improve the quality of the surface coated with the conductive layer A-forming paste composition, and can also provide a sheet-like conductive layer A with high strength. Examples of conductive carbon fibers that can be used in the conductive layer A include, but are not limited to, vapor-grown carbon fibers (VGCF (registered trademark)), carbon nanotubes, carbon nanocaps, carbon nanowalls, and the like. Other than the above, as conductive carbon fibers having a relatively large average fiber diameter, PAN (polyacrylonitrile)-based carbon fibers, pitch-based carbon fibers, and the like can be used.

The average fiber diameter of the conductive carbon fibers is not particularly limited, and is about 50 nm to 20 µm. To increase the relatively pore volume and impart gas permeability, smoothness, and water control properties, such as water drainability and retainability, to the conductive layer A, the preferable average particle diameter is about 50 to 450 nm, and particularly preferably about 100 to 250 nm. The fiber length in this case is not limited, and the preferable average is about 4 to 500 µm, particularly preferably about 4 to 300 µm, more preferably about 4 to 50 µm, and even more preferably about 10 to 20 µm. The preferable average of the aspect ratio is about 5 to 600, and particularly preferably 10 to 500. The fiber diameter, fiber length, and aspect ratio of the conductive carbon fibers are measured from images measured under a scanning electron microscope (SEM), etc.

When the function of gas diffusivity is imparted to the conductive layer A by providing a relatively large pore diameter, the preferable average fiber diameter of conductive carbon fibers is about 5 µm to 20 µm, and particularly preferably about 6 µm to 15 µm. The fiber length in this case is not limited, and the preferable average is 5 µm to 1 mm, and particularly preferably about 10 µm to 600 µm. The preferable average of the aspect ratio is about 1 to 50, and particularly preferably about 2 to 40. In this case as well, the fiber diameter, fiber length, and aspect ratio of the conductive carbon fibers are measured from images measured under a scanning electron microscope (SEM), etc.

### Polymer

The polymer is not particularly limited, and known or commercially available materials can be used. The polymer preferably has a Tg of about -100 to 300°C, more preferably -60 to 250°C, even more preferably about -30 to 220°C, and particularly preferably about -20 to 210°C. Specific examples of the polymer include ion-conductive polymer resins (e.g., Nafion), vinyl acetate resins, styrene-acrylic copolymer resins, styrene-vinyl acetate copolymer resins, ethylene-vinyl acetate copolymer resins, polyester-acrylic copolymer resins, urethane resins, acrylic resins, phenolic resins, polyvinylidene fluoride (PVDF), and the like. Other examples thereof include hexafluoropropylene-vinylidene fluoride copolymers; trifluorochloroethylene-vinylidene fluoride copolymers, and like fluororubbers; silicone rubbers; and the like. Such polymers may be used singly, or in a combination of two or more.

The use of an elastomer, such as fluororubber, as a polymer can increase the flexibility of the conductive layer A, and can also further increase its adhesion to other layers due to the low Tg of the elastomer. In this specification, the term "fluororubber" refers to a material having a Tg of about -30 to 100°C.

As the elastomer, an elastomer emulsion (a suspension in which elastomer particles are dispersed) may be used, or an elastomer dissolved in a solvent may be used. In the case of using an elastomer emulsion, it is preferable to prepare an emulsion by dispersing an elastomer in a solvent, or by using a commercially available product. Examples of the solvent include water, ethanol, propanol, and the like. Examples of the solvent used when an elastomer dissolved in a solvent is used include N-methylpyrrolidone (NMP), methyl ethyl ketone (MEK), toluene, vinyl acetate, dimethylacetamide (DMA), isopropyl alcohol (IPA), and the like.

To impart water repellency to the conductive layer A, a water-repellent resin, such as a fluororesin, may be used. In particular, when a polymer with poor water repellency is used as the polymer, the use of a water-repellent resin is effective for increasing water repellency. Examples of such fluororesins include polytetrafluoroethylene resin (PTFE), fluorinated ethylene propylene resin (FEP), perfluoroalkoxy resin (PFA), and the like.

In the present invention, the conductive layer A-forming paste composition may comprise a dispersant, alcohol, etc., in addition to the above conductive carbon material and polymer, as long as the effect of the present invention is not impaired.

### Dispersant

The dispersant may be any dispersant that can disperse conductive carbon particles, a polymer, etc., in water. Known or commercially available dispersants can be used. Examples of such dispersants include nonionic dispersants, such as polyoxyethylene distyrenated phenyl ether, polyoxyethylene alkylene alkyl ether, and polyethylene glycol alkyl ether; cationic dispersants, such as alkyltrimethylammonium salts, dialkyl dimethyl ammonium chlorides, and alkylpyridinium chlorides; and anionic dispersants, such as polyoxyethylene fatty acid esters and acidic group-containing structure-modified polyacrylate. Such dispersants may be used singly, or in a combination of two or more.

### Alcohol

The alcohol is not particularly limited, and known or commercially available alcohols can be used. Examples of such alcohols include monohydric or polyhydric alcohols having about 1 to 5 carbon atoms. Specific examples thereof include methanol, ethanol, 1-propanol, isopropanol, 1-butanol, 1-pentanol, and the like.

### Support

The support is not particularly limited as long as it has a function of supporting the conductive layer. Examples of the support include a separator, a conductive porous substrate, and the like.

### <Separator>

A known or commercially available separator can be used as a separator.

The material of the separator is not particularly limited, and can be suitably selected according to its purpose. Examples include metals, such as stainless steel, copper, titanium, aluminum, rhodium, tantalum, and tungsten, or alloys including at least one of these metals; graphite; carbon compounds in which carbon is added into resin; and the like. Of these, from the viewpoint of strength, reduction in fuel cell thickness, conductivity, etc., the metals or alloys containing at least one of the metals are preferable, and titanium and stainless steel are more preferable.

To improve corrosion resistance and conductivity, plate processing can be performed on the surface of the separator. The material of the plate is not particularly limited, and examples include metals, such as platinum, ruthenium, rhodium, tungsten, tantalum, and gold, or alloys thereof; carbon; composites of carbon and corrosion-resistant resins, e.g., epoxy resins and acrylic resins; and the like. Of these, gold is preferable in view of high water repellency.

The separator includes a gas flow channel. The width, depth, shape, etc., of the gas flow channel are not particularly limited, and can be suitably selected according to its purpose as long as the gas flow channel flows hydrogen, air, etc., which are the fuels of a fuel cell, and discharges water generated by the reaction of the fuel cell to the exterior of the cell. The width is typically 0.1 mm to 2 mm (preferably 0.5 mm to 1.5 mm), and the depth is typically 0.05 mm to 2 mm (preferably 0.1 mm to 1 mm).

The gas flow channel may have an uneven surface or a flat surface. The gas flow channel preferably has an uneven surface from the viewpoint of improvement in water repellency. When the gas flow channel has an uneven surface, the surface roughness is preferably 5 nm to 200 nm, and more preferably 5 nm to 100 nm. The surface roughness in the present invention is the value measured according to JIS B 0601.

The separator preferably includes a water-repellent layer partially or wholly formed on the gas flow channel, and the water-repellent layer includes at least one member selected from sulfur and sulfur compounds.

In the separator, a phosphorous-containing layer is formed on at least a side of, preferably both sides of, and more preferably the entire surface of a metal plate constituting the separator. The phosphorous-containing layer protects the surface of the metal plate from the superacid-related corrosion of the solid polymer electrolyte.

The material constituting the phosphorous-containing layer varies depending on the types of metal plates, and the types of phosphorous compounds used for forming the phosphorous-containing layer.

Examples of the phosphorus compound used in the formation of the phosphorous-containing layer include known inorganic phosphorus compounds, such as condensed phosphoric acids, e.g., phosphoric acid and polyphosphoric acid, and the salts thereof. Examples of the salts include ammonium salts, alkali metal salts, such as sodium salts and potassium salts, and metal salts.

### <Conductive Porous Substrate>

The conductive porous substrate can be used as a gas diffusion layer when used for fuel cells.

A known or commercially available gas diffusion layer can be used as the gas diffusion layer. Specifically, a conductive porous substrate can be used as a gas diffusion layer. The conductive porous substrate is not particularly limited as long as it has conductivity and porosity. Examples of the conductive porous substrate include carbon paper, carbon cloth, carbon felt, and the like.

For exemplary purposes with respect to the properties of typical carbon paper, the properties of TGP-H-060 produced by Toray Industries are shown below:
Thickness: 190 µm;
Electrical resistance: 80 mΩ·cm in the thickness direction, 5.8 mΩ·cm in the surface direction;
Porosity: 78%;
Bulk density: 0.44 g/cm³;
Surface roughness: 8 µm.
The thickness of the carbon paper, etc., is not limited. Preferably, the thickness is typically about 50 to 1,000 µm, and more preferably about 100 to 400 µm.

To suitably diffuse an oxidizing agent gas in a catalyst layer mentioned later, the conductive porous substrate may be a porous metallic body formed of a metal mesh, a metal foaming body, and the like. Use of the porous metal body further improves conductivity. Examples of metals used for the porous metal body include poor metals, such as nickel and palladium; silver; stainless steel; and the like. To improve corrosion resistance and conductivity, plate processing may be performed on the metal mesh and metal foaming body surface. The material of the plating is not restricted, but examples include metals, such as platinum, ruthenium, rhodium, tungsten, tantalum, and gold, or alloys thereof; carbon; composites of carbon and corrosion-resistant resins, such as epoxy resins and acrylic resins. Of these, gold is preferable from the viewpoint of high water repellency.

A conductive porous substrate previously subjected to a water-repellent treatment is preferably used. This can further enhance the water repellency of the conductive porous substrate.

The water-repellent treatment may be, for example, a method comprising immersing the conductive porous substrate in an aqueous dispersion of a fluororesin, etc. The fluororesin may be the aforementioned resin, or the like. In this method, a dispersant as mentioned above may be used to disperse a fluororesin in water, and an aqueous suspension containing a fluororesin and an aqueous dispersant is preferably used as the aqueous dispersion.

The amount of the fluororesin in the aqueous dispersion is not particularly limited and may be, for example, about 1 to 30 parts by weight, and preferably about 2 to 20 parts by weight, per 100 parts by weight of water.

### <Conductive Layer B>

In the laminate of the present invention, the conductive layer B is preferably formed on the surface of the conductive layer A (i.e., on the surface opposite to the support side surface of the conductive layer A).

The conductive layer B contains a conductive carbon material and a polymer. Although the thickness of the conductive layer B is not limited, the preferable thickness is typically about 1 µm to 150 µm, and particularly preferably about 5 µm to 100 µm. In the present invention, by forming the conductive layer B on the surface opposite to the support side surface of the conductive layer A, a laminate having improved gas permeability, smoothness, water control properties, etc. can be formed.

### Conductive Carbon Material

Examples of conductive carbon materials include, but are not limited to, conductive carbon particles, conductive carbon fibers, and the like. The materials listed in the conductive layer A section can be used as conductive carbon particles and conductive carbon fibers.

### Polymer

The materials used in the conductive layer A section can be used as polymers. That is, the polymer preferably has a Tg of about -100 to 300C°, more preferably -60 to 250C°, even more preferably about -30 to 220C°, and particularly preferably about - 20 to 210C°. Specific examples of the polymer include ion-conductive polymer resins (e.g., Nafion), vinyl acetate resins, styrene-acrylic copolymer resins, styrene-vinyl acetate copolymer resins, ethylene-vinyl acetate copolymer resins, polyester-acrylic copolymer resins, urethane resins, acrylic resins, phenolic resins, polyvinylidene fluoride (PVDF), and the like. Other examples thereof include hexafluoropropylene-vinylidene fluoride copolymers; trifluorochloroethylene-vinylidene fluoride copolymers, and like fluororubbers; silicone rubbers; and the like. Such polymers may be used singly, or in a combination of two or more.

In the present invention, the conductive layer B-forming paste composition may comprise a fluororesin, a dispersant, alcohol, etc., in addition to the above conductive carbon material and polymer, as long as the effect of the present invention is not impaired. Usable fluororesins, dispersants, and alcohols may be the same materials as used in the conductive layer A.

### <Characteristics of Conductive Layer A and Conductive Layer B>

In the present invention, the front and back sides of the conductive layer A have different densities of the polymer component. That is, the conductive layer A has a polymer with a higher density at one side surface than at the opposite side surface thereof. When the conductive layer A contains two or more types of polymers, at least one type of polymer is preferably present with a higher density at one side surface than at the opposite side surface thereof. Specifically, when the polymer that is present with a higher density at one side surface than at the opposite side surface thereof contains a fluorine atom, the one side surface of the conductive layer A preferably has a fluorine atom content 1 atm% or more, more preferably 2 atm% or more larger than at the opposite side surface thereof. The upper limit of the difference in fluorine atom content is not particularly limited, and it is typically about 20 atm%.

The surface of the conductive layer A having a higher fluorine atom content preferably has a fluorine atom content of 10 to 20 atm%, and more preferably 11 to 18 atm%. When the fluorine atom content is in this range, adhesion with the support can be further improved. The surface of the conductive layer A having a lower fluorine atom content preferably has a fluorine atom content of 1 to 16 atm%, and more preferably 2 to 15 atm%. When the fluorine atom content is in this range, gas diffusivity and battery properties can be improved.

In the above example, the polymer containing a fluorine atom is used. When a polymer that is present with a higher density at one side surface than at the opposite side surface thereof does not contain a fluorine atom, the density degree can be confirmed by suitably confirming the density of an atom contained in the polymer. Specifically, for a polymer containing an oxygen atom, the density can be confirmed by the oxygen atom content, and for a polymer containing a nitrogen atom, the density can be confirmed by the nitrogen atom content. The preferable density difference, between the front and back surfaces, or the preferable density of the oxygen atom or nitrogen atom is the same as that of the fluorine atom. Similar to the fluorine atom content, the oxygen atom content and nitrogen atom content in the surface of the conductive layer A are measured using energy-dispersive X-ray fluorescence spectrometry, etc.

In the present invention, the front and back sides of the conductive layer B may have different densities of the polymer component, or the polymer component may be uniformly present in the conductive layer B. That is, in the conductive layer B, the polymer is present with a higher density at one side surface than at the opposite side surface thereof, or the polymer component may be uniformly present in the conductive layer B.

In the present invention, to further improve gas diffusivity and battery properties, the front and back sides of the conductive layer B desirably have different densities of the polymer component. Specifically, in the conductive layer B, the polymer is preferably present with a higher density at one side surface than at the opposite side surface thereof. More specifically, when the polymer that is present with a higher density at one side surface than at the opposite side surface thereof contains a fluorine atom, the side surface of the conductive layer B preferably has a fluorine atom content 1 atm% or more, more preferably 2 atm% or more larger than at the opposite side surface thereof. The upper limit of the difference in fluorine atom content is not particularly limited, and is typically about 20 atm%.

The surface of the conductive layer B having a higher fluorine atom content preferably has a fluorine atom content of 10 to 20 atm%, and more preferably 11 to 18 atm%. When the fluorine atom content is in this range, adhesion with the support can be further improved. The surface of the conductive layer B having a lower fluorine atom content preferably has a fluorine atom content of 1 to 16 atm%, and more preferably 2 to 15 atm%. With the fluorine atom content is in this range, gas diffusivity and battery properties can be improved.

As in the conductive layer A, in the above example, the polymer containing a fluorine atom is used. When a polymer that is present with a higher density at one side surface than at the opposite side surface thereof does not contain a fluorine atom, the density degree can be confirmed by suitably confirming the density of an atom contained in the polymer. Specifically, for a polymer containing an oxygen atom, the density can be confirmed by the oxygen atom content, and for a polymer containing a nitrogen atom, the density can be confirmed by the nitrogen atom content. The preferable density difference, between the front and back surfaces, or the preferable density of the oxygen atom or nitrogen atom is the same as that of the fluorine atom.

In the present invention, when the conductive layer B contains two or more types of polymers, at least one type of polymer is preferably present with a higher density at one side surface than at the opposite side surface thereof. The surface at which the polymer is present with a higher density in the conductive layer B has excellent adhesion, thus improving adhesion with another material.

Specifically, the present invention desirably satisfies either of the following conditions (A) and (B):
(A) The polymer in the conductive layer B is present with a higher density at the surface not in contact with the conductive layer A than at the surface in contact with the conductive layer A, and
(B) The polymer in the conductive layer B is present with a higher density at the surface in contact with the conductive layer A than at the surface not in contact with the conductive layer A.

The distribution states of the polymer component in the conductive layer A and conductive layer B are confirmed by analyzing both surfaces of each layer using energy-dispersive X-ray fluorescence spectrometry, etc. The distribution of the polymer component can also be analyzed by energy-dispersive X-ray fluorescence analysis in the layer's cross-sectional direction. When the element specific to the polymer cannot be detected by energy-dispersive X-ray fluorescence analysis, for example, in the case of using a styrene-acrylic acid rubber, the functional group resulting from the polymer is observed by a Fourier transform infrared spectrophotometer, etc.

In the present invention, the pore diameter distribution of each of the conductive layer A and the conductive layer B is preferably within the range of 10 nm to 10 µm. To impart gas permeability, smoothness, and water control properties, such as water drainability and water retainability to the conductive layers, the pore diameter distribution is preferably such that the volume of pores having a diameter of 10 nm to 5 µm accounts for at least 50% of the total pore volume. The above-mentioned pore diameter distribution can be achieved by using, for example, conductive carbon fibers with an average fiber diameter of about 50 to 450 nm, a polymer, conductive carbon particles with an average particle diameter (arithmetic average particle diameter) of 5 to 200 nm, and conductive carbon particles (e.g., graphite, active charcoal, etc.) with an average particle diameter of 500 nm to 40 µm.

To impart gas diffusivity to the conductive layers, the pore diameter distribution is preferably such that the volume of pores having a diameter of 5 to 100 µm accounts for at least 50% of the total pore volume. The above pore diameter distribution can be achieved, for example, by using conductive carbon fibers with an average fiber diameter of 5 µm or more, conductive carbon particles with an average particle diameter of 5 µm or more, a polymer, etc.

The pore diameter distribution can be measured, for example, by an AutoPore IV 9500 automatic porosimeter (produced by Shimadzu Corporation).

### <Method for Producing the Conductive Layer A and the Conductive Layer B>

The conductive layer A of the present invention can be obtained, for example, by applying the conductive layer A-forming paste composition containing a conductive carbon material and a polymer to a substrate, and drying the composition; and then detaching the substrate.

The conductive layer B can also be obtained by applying the conductive layer B-forming paste composition containing a conductive carbon material and a polymer to a substrate, and drying the composition; and then detaching the substrate.

According to the production method above, the proportion of the polymer component that is present at the surfaces of the conductive layer A and conductive layer B can be adjusted by utilizing the phenomenon, occurring during the drying of the paste composition, in which the polymer component contained in the conductive layer A-forming paste composition or in the conductive layer B-forming paste composition segregates from the side not in contact with the substrate toward the side in contact with the substrate. Accordingly, the density of the polymer component at one side surface can be increased by adjusting the amount of polymer used, viscosity of the paste composition, particle diameter in the case of using an elastomer emulsion as a polymer, drying time, specific gravity of the conductive carbon material (e.g., conductive carbon particles, conductive carbon fibers, etc.), functional group present at the surface of the conductive carbon material (e.g., conductive carbon particles, conductive carbon fibers, etc.), and the like. In particular, as the viscosity of the paste composition lowers and the drying time lengthens, the resin tends to segregate.

### Content

The conductive layer A-forming paste composition may contain, for example, about 5 to 200 parts by weight (particularly, 40 to 150 parts by weight) of the polymer, about 0 to 100 parts by weight (particularly, 5 to 50 parts by weight) of the dispersant, about 0 to 1,100 parts by weight (particularly, 100 to 1,000 parts by weight) of the solvent, such as alcohol, based on 100 parts by weight of the conductive carbon particles (the total amount of conductive carbon particles and conductive carbon fibers, when conductive carbon fibers are contained). When the conductive carbon fibers are contained, the preferable ratio of conductive carbon particles to conductive carbon fibers is in the range of about 9:1 to 1:9 (weight ratio), and particularly preferably about 8:2 to 2:8 (weight ratio). To enhance water repellency, the composition may contain a fluororesin as a polymer in an amount of about 5 to 250 parts by weight (particularly, 10 to 200 parts by weight). When an elastomer emulsion is used as a polymer, the solids content is preferably within the above-mentioned range.

The formulation of the conductive layer B-forming paste composition may be the same as that of the conductive layer A-forming paste composition.

The substrate is not particularly limited insofar as the paste composition can be applied thereto. Known or commercially available substrates can be used widely. Examples of substrates include polyimide, polyethylene terephthalate, polyparabanic acid aramid, polyamide (nylon), polysulfone, polyether sulphone, polyphenylene sulfide, polyether ether ketone, polyether imide, polyarylate, polyethylene naphthalate, polypropylene, and like polymeric films. Further, ethylene-tetrafluoroethylene copolymers (ETFE), tetrafluoroethylene-hexafluoropropylene copolymers (FEP), tetrafluoro-fluoro alkyl vinyl ether copolymer (PFA), polytetrafluoroethylene (PTFE), or the like can also be used. Among these, polymeric films that are highly heat-resistant and easily available are preferable. For example, polyethylene terephthalate, polyethylene naphthalate, polytetrafluoroethylene (PTFE), polyimide, and like films are preferable.

The substrate preferably has a release layer formed thereon. For example, the release layer may comprise a known wax. As a substrate having a release layer formed thereon, a film coated with SiOx, a fluororesin, or the like may be used.

It is preferable from the viewpoint of ease of handling and cost efficiency that the thickness of the substrate is typically about 6 to 100 µm, and particularly preferably about 10 to 60 µm.

The application method of each paste composition is preferably application using known or commercially available doctor blades and like blades; wire bars; squeegees, and like instruments; applicators; die coaters; etc.

The amount of each paste composition to be applied is not particularly limited. For example, to impart gas permeability, smoothness, and water control properties, such as water drainability and water retainability to the conductive layers, the paste composition is preferably applied in such an amount that the conductive layer after drying has a thickness of about 1 to 150 µm, and preferably about 5 to 100 µm. To impart gas diffusivity to the conductive layers, the paste composition is preferably applied in such an amount that the conductive layer after drying has a thickness of about 1 to 300 µm, and preferably about 50 to 250 µm.

The drying conditions are also not limited. The drying conditions can be suitably changed according to the conditions, such as the volatilization temperature of the solvent used (e.g., alcohol) (for example, about 150°C), and the glass transition temperature of the polymer.

After the conductive layer A and conductive layer B are obtained by drying, the conductive layers may be further subjected to drying at a higher temperature (e.g., about 150 to 500°C), if necessary.

Further, the conductive layer A and conductive layer B may be treated on the surface (in particular, on the surface in contact with another layer). Examples of the surface treatment include mechanical treatment to physically roughen the surface by a metallic brush, sandblasting, or the like, matting treatment, corona discharge treatment, plasma discharge treatment, ultraviolet treatment, flame treatment, etc.

For example, in the corona treatment, the inter electrode distance is 0.3 to 5 mm, the discharge energy is 0.5 to 5 kW, a silicone rubber covering electrode is used as an electrode, and a sample is irradiated at the rate of 0.1 to 50 m/min.

### <Method for Producing Laminate>

The laminate of the present invention can be produced by laminating and bonding the support and the conductive layer A.

For example, the laminate of the present invention is produced by the following steps:
(I) Forming a conductive layer A using a conductive layer A-forming paste composition containing a conductive carbon material and a polymer, and
(II) Disposing the conductive layer A on the support in a manner such that the polymer contained in the conductive layer A produced in (I) above is present with a higher density at the surface that is in contact with the support, and bonding the support and the conductive layer A.

Before or after step (II), the step of producing a conductive layer B, and the step of laminating the conductive layer B on the conductive layer A may be added. The conductive layer B can be obtained, for example, by previously applying a conductive layer B-forming paste composition containing a conductive carbon material and a polymer on the substrate, and drying the composition; and then detaching the conductive layer B from the substrate. In this case, the bonding of the conductive layer B and the conductive layer A may be performed separately from, or at the same time as the step of bonding the support and the conductive layer A performed in step (II).

An example of the method for producing the laminate of the present invention is as follows.

The method for producing the laminate of the present invention comprises the steps of:
(I) Applying a conductive layer A-forming paste composition containing a conductive carbon material and a polymer to a substrate, and drying the composition, and then detaching the conductive layer A from the substrate to produce the conductive layer A; and
(II) Disposing the conductive layer A on a support in a manner such that the polymer contained in the conductive layer A produced in (I) above is present with a higher density at the surface that is in contact with the support, and performing hot-pressing for bonding.

The temperature for hot pressing in step (II) is not particularly limited, and is typically from 25 to 300°C. The pressure for hot pressing in step (II) is not particularly limited, and it is typically from 0.5 to 30 MPa.

The method for producing the laminate comprising a conductive layer B, for example, includes the steps of:
(I) Applying a conductive layer A-forming paste composition containing a conductive carbon material and a polymer to a substrate, and drying the composition, and then detaching the conductive layer A from the substrate to produce the conductive layer A;
(I') Applying a conductive layer B-forming paste composition containing a conductive carbon material and a polymer to a substrate, and drying the composition, and then detaching the conductive layer B from the substrate to produce the conductive layer B; and
(II') Disposing the conductive layer A on a support in a manner such that the polymer contained in the conductive layer A produced in (I) above is present with a higher density at the surface that is in contact with the support, disposing the conductive layer B produced in (I') above on the conductive layer A, and performing hot-pressing for bonding.

In the present invention, the front and back sides of the conductive layer B desirably have different densities of the polymer component. Specifically, the polymer present in one side surface of the conductive layer B is preferably present with a higher density than at the opposite side surface thereof.

Accordingly, in step (II') above, the conductive layer B is preferably disposed on the conductive layer A in a manner such that the laminate satisfies either of the following conditions (A) and (B):
(A) The polymer in the conductive layer B is present with a higher density at the surface not in contact with the conductive layer A than at the surface in contact with the conductive layer A, and
(B) The polymer in the conductive layer B is present with a higher density at the surface in contact with the conductive layer A than at the surface not in contact with the conductive layer A.

The temperature of hot pressing in step (II') above is not particularly limited, and is typically from 25 to 300°C. The pressure of hot pressing in step (II') is not particularly limited, and is typically from 0.5 to 30 MPa.

After the formation of the laminate of the support and conductive layer A, the laminate of the support, conductive layer A and conductive layer B, and the laminate of the conductive layer A and conductive layer B, drying (for example, at about 150 to 500°C) may be performed at a high temperature as required.

### 2. Membrane-Electrode Assembly for Batteries

The laminate (comprising at least a conductive porous substrate and a conductive layer A) of the present invention can also be used to produce a membrane-electrode assembly for batteries. Specifically, the laminate of the present invention is preferably stacked on one side or both sides of the catalyst layer laminated membrane wherein one or two catalyst layers are laminated on one side or both sides of the electrolyte membrane in a manner such that the conductive layer A or conductive layer B and the catalyst layer are face-to-face.

In the present invention, the membrane-electrode assembly can be produced by stacking and bonding the previously produced laminate of the present invention on one side or both sides of the catalyst layer electrolyte membrane laminate described below. The laminate of the present invention and the membrane-electrode assembly can also be produced at the same time by stacking the laminate of the present invention on one side or both sides of the catalyst layer laminated membrane described below in a manner such that the catalyst layer and the conductive layer A or conductive layer B of the laminate of the present invention are face-to-face.

Alternatively, the conductive layer B may be stacked on one side or both sides of the catalyst layer laminated membrane described below beforehand, and the laminate of the support and the conductive layer A may be stacked on the conductive layer B in a manner such that the conductive layer B and the conductive layer A are face-to-face, and press bonded to produce the membrane-electrode assembly.

### <Catalyst Layer Laminated Membrane>

### Electrolyte Membrane

The electrolyte membrane is not limited as lone as it is a hydrogen ion-conductive electrolyte membrane or a hydroxide ion-conductive electrolyte membrane. Known or commercially available electrolyte membranes, such as hydrogen ion-conductive electrolyte membranes or hydroxide ion-conductive electrolyte membranes, can be used. Examples of hydrogen ion-conductive electrolyte membranes include the "Nafion" (registered trademark) membrane produced by Du Pont, Inc.; the "Flemion" (registered trademark) membrane produced by Asahi Glass Co., Ltd.; the "Aciplex" (registered trademark) membrane produced by Asahi Kasei Corporation; the "GoreSelect" (registered trademark) membrane produced by Gore & Assoc. Inc.; and the like. Examples of hydroxide ion-conductive electrolyte membranes include hydrocarbon-based electrolyte membranes, such as Aciplex (registered trademark) A-201, A-211, A-221, etc., produced by Asahi Kasei Corporation; Neosepta (registered trademark) AM-1 and AHA produced by Tokuyama Corporation; and the like. Examples of fluororesin-based electrolyte membranes include Tosflex (registered trademark) IE-SF34 produced by Tosoh Corporation; Fumapem (registered trademark) FAA produced by FuMA-Tech GmbH; and the like.

The preferable thickness of the electrolyte membrane is typically about 20 to 250 µm, and particularly preferably about 20 to 150 µm.

When the membrane-electrode assembly for batteries of the present invention is used for metal-air batteries, a gel or liquid electrolyte can be used in addition to solid electrolyte membranes. In this case, the materials used for the electrolyte are not particularly limited, and known or commercially available materials conventionally used for metal-air batteries can be used. For example, the electrolyte is selected according to the metal at the negative electrode, and water, a salt solution, an alkaline solution, a metal salt solution of the metal at the negative electrode, etc., can be suitably used.

### Catalyst Layer

As the catalyst layer, a known or commercially available platinum-containing catalyst layer (a cathode catalyst or an anode catalyst) can be used. Specifically, the catalyst layer is preferably formed of a dried product of the catalyst layer-forming paste composition, comprising (1) carbon particles supporting catalyst particles and (2) a hydrogen ion-conductive polymer electrolyte (preferably a hydrogen ion-conductive polymer electrolyte).

Any catalyst particles that can cause an oxidation-reduction reaction (in the case of fuel cells, oxidation of hydrogen at the anode, and reduction of oxygen at the cathode; and in the case of metal-air batteries, reduction of oxygen at the positive electrode) and that have catalytic activity can be used as the catalyst particles. Examples of catalyst particles include platinum, platinum alloys, platinum compounds, and the like. Examples of platinum alloys include alloys of platinum and at least one metal selected from the group consisting of ruthenium, palladium, nickel, molybdenum, iridium, iron, and cobalt.

Examples of hydrogen ion-conductive polymer electrolytes include perfluorosulfonic acid-based fluorine ion-exchange resins. Specific examples thereof include perfluorocarbon sulfonic acid-based polymers (PFS-based polymers) in which a C-H bond of a hydrocarbon-based ion-exchange membrane is replaced with fluorine.

The thickness of the catalyst layer is not particularly limited. The thickness thereof is typically about 1 to 100 µm, and preferably about 2 to 50 µm.

In the catalyst layer, fluororesins and non-polymer-based fluorine materials, such as fluorinated pitch, fluorinated carbon, and graphite fluoride, can be added as a water repellent.

In metal-air batteries, examples of the catalyst used for the positive electrode include, in addition to the catalysts used for anode and cathode catalysts above, manganese dioxide, gold, active charcoal, iridium oxides, perovskite complex oxides, metal-containing pigments, etc. The catalyst powders thereof can be dispersed using a water repellent as a binder, and applied to form a catalyst layer. Alternatively, a material that can be vapor deposited is vapor deposited to form a catalyst layer. The catalyst layer can be also formed by reducing a metal salt solution on an electrode to deposit metal in a fine shape.

The metal at the negative electrode is selected depending on the type of the metal-air battery to be formed. Metals, such as lithium (Li), sodium (Na), potassium (K), magnesium (Mg), calcium (Ca), zinc (Zn), aluminum (Al), and iron (Fe), or alloys or metal compounds thereof can be used as a negative-electrode active material. To increase the contact area of the negative electrode and the electrolyte, the negative electrode preferably has pores.

### Method for Producing Catalyst Layer Laminated Membrane

The catalyst layer laminated membrane can be produced, for example, by using a transfer film for catalyst layer formation in which a catalyst layer is formed on one side of a substrate, and disposing the catalyst layer transfer film in a manner such that the catalyst layer and the electrolyte membrane are face-to-face, pressing the layers under heat to transfer the catalyst layer to the electrolyte membrane, and then detaching the transfer film. A catalyst layer laminated membrane comprising a catalyst layer on both sides of the electrolyte membrane can be produced by repeating this operation twice. In consideration of work efficiency, etc., simultaneously laminating the catalyst layer on both sides of the electrolyte membrane is preferable.

For the transfer, it is preferable to press the layers from the substrate film side of the catalyst layer transfer film using a known pressing machine, etc. To avoid poor transfer, the preferable pressure level is typically about 0.5 to 10 MPa, and particularly preferably about 1 to 8 MPa. To avoid poor transfer, the face to be pressed is preferably heated during the pressing operation. Preferably, the heating temperature is appropriately changed according to the type of electrolyte membrane to be used.

The substrate film is not particularly limited, and the same substrates as mentioned above can be used. Examples of substrate films include polymeric films such as polyimide, polyethylene terephthalate (PET), polysulfone, polyether sulphone, polyphenylene sulfide, polyether ether ketone, polyether imide, polyarylate, polyethylene naphthalate (PEN), polyethylene, polypropylene, and polyolefin. Heat-resistant fluororesins, such as ethylene-tetrafluoroethylene copolymer (ETFE), tetrafluoroethylene-hexafluoropropylene copolymer (FEP), tetrafluoroethylene-perfluoroalkyl vinyl ether copolymer (PFA), and polytetrafluoroethylene (PTFE), can also be used. Among these, inexpensive and easily available polymeric films are preferable; and polyethylene terephthalate, etc., are more preferable.

In view of the workability, cost efficiency, etc., of forming the catalyst layer on the substrate film, the preferable thickness of the substrate film is typically about 6 to 150 µm, and particularly preferably about 12 to 75 µm.

The substrate film may have a release layer formed thereon. Examples of release layers include a layer comprising a known wax, a plastic film coated with known SiOx or a fluororesin, and the like. A substrate film comprising a film with high release properties formed thereon, such as a laminate of a PET substrate and a heat-resistant fluororesin substrate; and like structured substrate films, are also usable.

Other than the transfer method mentioned above, the catalyst layer can be formed on the electrolyte membrane by applying the catalyst layer-forming paste composition on the electrolyte membrane. In this case, known conditions can be used.

### 3. Battery

The battery of the present invention (e.g., solid polymer fuel cells, metal-air batteries, etc.) can be produced by the method of combining the catalyst layer laminated membrane with the laminate (laminate of the separator and the conductive layer A) of the present invention, or by providing a known or commercially available separator, terminals, etc., in the above membrane-electrode assembly or on the conductive porous substrate side of the laminate (laminate of the conductive porous substrate and the conductive layer A).

For example, when the laminate of the present invention is used for metal-air batteries, the conductive porous substrate can be used as the support to assemble the negative electrode/electrolyte/separator for metal-air battery/conductive layer A (conductive layer B)/support. In this case, since the conductive layer A (conductive layer B) includes a conductive carbon material, it functions as the catalyst layer and/or gas diffusion layer. In addition to the above structure, a positive electrode catalyst layer can be laminated on the conductive layer A side. In this case, a conductive porous substrate such as metal mesh can be used as the support.

When the laminate of the present invention is used for metal-air batteries, the structure of (negative electrode/electrolyte/separator for metal-air battery/positive electrode catalyst layer/(conductive layer B)/conductive layer A/support) is an option. In this case as well, since the conductive layer A (conductive layer B) includes a conductive carbon material, it functions as a catalyst layer and/or a gas diffusion layer. Therefore, the laminate can be used without providing the positive electrode catalyst layer mentioned above.

The types of metal-air batteries include lithium-air batteries, sodium-air batteries, potassium-air batteries, magnesium-air batteries, calcium-air batteries, zinc-air batteries, aluminum-air batteries, and iron-air batteries. The metal-air battery may be a primary battery or a secondary battery. The materials used to form the positive electrode catalyst layer, negative electrode, electrolyte, separator, and support may be known or commercially available materials that are conventionally used in metal-air batteries. The electrolyte may be in the form of a liquid, a gel, or a solid.

### Advantageous Effects of Invention

According to the present invention, a laminate having good adhesion between the support (separator or conductive porous layer) and the conductive layer can be provided.

According to the present invention, a laminate having good adhesion between the conductive layer A and the conductive layer B, and having reduced film thickness variation in each conductive layer can be provided.

### Description of Embodiments

The present invention is explained in detail with reference to the Examples and Comparative Examples; however, the present invention is not limited to the following examples.

### <Materials>

The materials shown below were used for preparation of the conductive layer A-forming paste composition and the conductive layer B-forming paste composition.
Conductive carbon particles: Furnace black (Balkan xc72R: produced by Cabot Corporation), average molecular weight: 1,000 to 3,000, average particle diameter: 30 nm
Conductive carbon fibers (1): VGCF (VGCF (registered trademark) (standard product): produced by Showa Denko K.K.; average fiber diameter: 150 nm, average fiber length: 10 to 20 µm, and average aspect ratio: 10 to 500)
Conductive carbon fibers (2) : S241 (produced by Osaka Gas Chemical, Co., Ltd.; average fiber diameter: 13 µm, average fiber length: 130 µm, and average aspect ratio: 10)
Polymer (1): Nafion (a 5 wt% Nafion solution "DE-520" produced by Du Pont, Inc., was used), Tg: 130°C
Polymer (2): Solef21216/1001 (produced by Solvay Solexis; PVDF; solids content: 10 wt%), Tg: -30°C
Polymer (3): Polytetrafluoroethylene (PTFE) (AD911L: produced by Asahi Glass Co., Ltd.), Tg: about 130°C
Dispersant: Emulgen A-60 (produced by Kao Corporation)

### <Example 1>

Conductive carbon particles (100 parts by weight), polymer (3) (50 parts by weight), conductive carbon fibers (1) (75 parts by weight), polymer (1) (1,250 parts by weight (solids content: 62.5 parts by weight)), dispersant (25 parts by weight), and water (350 parts by weight) were subjected to media dispersion to prepare a conductive layer A-forming paste composition. The conductive layer A-forming paste composition was applied to a polyethylene terephthalate (PET) film including a release layer to a thickness of about 50 µm using an applicator. Regarding the viscosity of the paste composition, the shear viscosity was about 150 mPa·s at a shear rate of 1,000 (1/s). The viscosity of the paste composition was measured using a Physica MCR301 produced by Anton Paar GmbH (a cone-shaped jig with a diameter of 50 mm and an angle of 1° was used as a jig). The paste compositions used in other Examples and Comparative Examples were measured in the same manner. Subsequently, drying was performed in a drying furnace set at 95°C for about 15 minutes to produce a conductive layer (A-1). In the conductive layer (A-1), the polymers (polymers (1) and (3)) were present with a higher density at the surface in contact with the PET film.

Subsequently, the conductive layer (A-1) was detached from the PET film including the release layer, and the surface of the conductive layer (A-1) having the polymers (polymers (1) and (3)) with a higher density was brought into contact with the surface of a metal separator obtained by applying gold after the formation of a flow channel on a stainless steel substrate. Hot-pressing was then performed at a pressing temperature of 120°C and a pressing pressure of 15 kN, for a pressing time of 2 minutes to produce the laminate of Example 1.

### <Example 2>

A conductive layer (A-1) was produced in the same manner as in Example 1.

Subsequently, the conductive layer (A-1) was detached from the PET film including the release layer, and the surface of the conductive layer (A-1) having the polymers (polymers (1) and (3)) with a higher density was brought into contact with the surface of carbon paper (carbon paper TGPH090 produced by Toray Industries, Inc.). Hot-pressing was then performed at a pressing temperature of 120°C and a pressing pressure of 25 kN, for a pressing time of 2 minutes to produce the laminate of Example 2.

### <Example 3>

Polymer (2) was added to methyl ethyl ketone (MEK), and the mixture was stirred at 80°C for 60 minutes using a stirrer (media rotation speed: 300 rpm), thereby obtaining a PVDF solution having a solids content (polymer (2)) of 10 wt% in which polymer (2) was dissolved in the methyl ethyl ketone. Conductive carbon fibers (2) (100 parts by weight), the prepared PVDF solution having a solids content of 10 wt% (100 parts by weight), and methyl ethyl ketone (50 parts by weight) were subjected to media dispersion to prepare a conductive layer A-forming paste composition. The conductive layer A-forming paste composition was applied to a polyethylene terephthalate (PET) film including a release layer to a thickness of about 50 µm using an applicator. Regarding the viscosity of the paste composition, the shear viscosity was about 437 mPa·s at a shear rate of 1,000 (1/s). Subsequently, drying was performed in a drying furnace set at 95°C for about 15 minutes to produce a conductive layer (A-2). In the conductive layer (A-2), the polymer (polymer (2)) was present with a higher density at the surface in contact with the PET film.

Subsequently, the conductive layer (A-2) was detached from the PET film including the release layer, and the surface of the conductive layer (A-2) having the polymer (polymer (2)) with a higher density was brought into contact with the surface of a metal separator obtained by applying gold after the formation of a flow channel on a stainless steel substrate. Hot-pressing was then performed at a pressing temperature of 150°C and a pressing pressure of 100 kN, for a pressing time of 2 minutes to produce the laminate of Example 3.

### <Example 4>

A conductive layer (A-2) was produced in the same manner as in Example 3.

Subsequently, the conductive layer (A-2) was detached from the PET film including the release layer, and the surface of the conductive layer (A-2) having the polymer (polymer (2)) with a higher density was brought into contact with the surface of carbon paper (carbon paper TGPH090 produced by Toray Industries, Inc.). Hot-pressing was then performed at a pressing temperature of 150°C and a pressing pressure of 100 kN, for a pressing time of 2 minutes to produce the laminate of Example 4.

### <Example 5>

Conductive carbon particles (100 parts by weight), polymer (3) (50 parts by weight), conductive carbon fibers (1) (75 parts by weight), polymer (1) (1,250 parts by weight (solids content: 62.5 parts by weight)), dispersant (25 parts by weight), and water (350 parts by weight) were subjected to media dispersion to prepare a conductive layer B-forming paste composition. The conductive layer B-forming paste composition was applied to a polyethylene terephthalate (PET) film including a release layer to a thickness of about 50 µm using an applicator. Regarding the viscosity of the paste composition, the shear viscosity was about 150 mPa·s at a shear rate of 1,000 (1/s). Thereafter, drying was performed in a drying furnace set at 95°C for about 15 minutes to produce a conductive layer (B-1). In the conductive layer (B-1), the polymers (polymers (1) and (3)) were present with a higher density at the surface in contact with the PET film. The conductive layer (B-1) produced was the same as the conductive layer (A-1) produced in Example 1.

The surface opposite to the surface of the conductive layer (B-1) having the polymers (polymers (1) and (3)) with a higher density was brought into contact with the surface of the conductive layer (A-1) of the laminate produced in Example 1, and hot-pressing was performed at a pressing temperature of 120°C and a pressing pressure of 100 kN, for a pressing time of 2 minutes to produce the laminate of Example 5.

### <Example 6>

The surface opposite to the surface of the conductive layer (B-1) having the polymers (polymers (1) and (3)) with a higher density was brought into contact with the surface of the conductive layer (A-1) of the laminate produced in Example 2, and hot-pressing was then performed at a pressing temperature of 120°C and a pressing pressure of 100 kN, for a pressing time of 2 minutes to produce the laminate of Example 6.

### <Comparative Example 1>

The laminate of Comparative Example 1 was produced in the same manner as in Example 1 except that the conductive layer (A-1) was detached from the PET film including the release layer, the surface opposite to the surface of the conductive layer (A-1) having the polymers (polymers (1) and (3)) with a higher density was brought into contact with the surface of a metal separator obtained by applying gold after the formation of a flow channel on a stainless steel substrate, and hot-pressing was performed at a pressing temperature of 120°C and a pressing pressure of 15 kN, for a pressing time of 2 minutes.

### <Comparative Example 2>

The laminate of Comparative Example 2 was produced in the same manner as in Example 2 except that the conductive layer (A-1) was detached from the PET film including the release layer, the surface opposite to the surface of the conductive layer (A-1) having the polymers (polymers (1) and (3)) with a higher density was brought into contact with the surface of carbon paper (carbon paper TGPH090 produced by Toray Industries, Inc.), and hot-pressing was performed at a pressing temperature of 120°C and a pressing pressure of 25 kN, for a pressing time of 2 minutes.

### <Comparative Example 3>

The laminate of Comparative Example 3 was produced in the same manner as in Example 3 except that the conductive layer (A-2) was detached from the PET film including the release layer, the surface opposite to the surface of the conductive layer (A-2) having the polymer (polymer (2)) with a higher density was brought into contact with the surface of a metal separator obtained by applying gold after the formation of a flow channel on a stainless steel substrate, and hot-pressing was performed at a pressing temperature of 150°C and a pressing pressure of 100 kN, for a pressing time of 2 minutes.

### <Comparative Example 4>

The laminate of Comparative Example 4 was produced in the same manner as in Example 4 except that the conductive layer (A-2) was detached from the PET film including the release layer, the conductive layer (A-2) having the polymer (polymer (2)) with a higher density was brought into contact with the surface opposite to the surface of carbon paper (carbon paper TGPH090 produced by Toray Industries. Inc.), and hot-pressing was performed at a pressing temperature of 150°C and a pressing pressure of 100 kN, for a pressing time of 2 minutes.

### <Reference Example 1> (Production of Catalyst Layer Laminated Membrane)

4 g of platinum catalyst-supporting carbon particles ("TEC10E50E" produced by Tanaka Kikinzoku Kogyo), 40 g of an ion-conductive polymer electrolyte solution (Nafion 5 wt% solution: "DE-520" produced by Du Pont, Inc.), 12 g of distilled water, 20 g of n-butanol, and 20 g of t-butanol were added, and mixed while being stirred using a disperser, thereby obtaining an anode catalyst layer-forming paste composition and a cathode catalyst layer-forming paste composition.

The anode catalyst layer-forming paste composition and the cathode catalyst layer-forming paste composition were each individually applied to a transfer substrate (material: polyethylene terephthalate film) using an applicator, and dried at 95°C for 30 minutes to form catalyst layers, thereby obtaining an anode catalyst layer-forming transfer sheet and a cathode catalyst layer-forming transfer sheet. The coating amount of the catalyst layer was determined so that both of the anode catalyst layer and the cathode catalyst layer had a platinum-supporting amount of about 0.45 mg/cm².

Using the anode catalyst layer-forming transfer sheet and the cathode catalyst layer-forming transfer sheet produced above, hot-pressing was performed on front and back surfaces of the electrolyte membrane (Nafion membrane "NR-212" produced by Du Pont, Inc.; film thickness: 50 µm) at 135°C and 5 MPa for 2 minutes, and then each of the transfer substrates alone was detached. The catalyst layer laminated membrane was thus produced.

### <Example 7>

Two laminates produced according to Example 5 were prepared. The laminates were disposed in a manner such that the conductive layer (B-1) side surface of each laminate was in contact with each of the catalyst layer surfaces of the catalyst layer laminated membrane obtained in Reference Example 1. Hot pressing was performed at a pressing temperature of 100°C, pressing pressure of 7.5 kN, and pressing time of 2 minutes, and the solid polymer fuel cell of Example 7 was thus produced.

### <Example 8>

Two laminates produced according to Example 1 were prepared. Two conductive layers (B-1) produced according to Example 5 were also prepared.

Each conductive layer (B-1) was detached from the PET film including the release layer, and the surface of the conductive layer (B-1) having the polymers (polymers (1) and (3)) with a higher density was brought into contact with each side of the catalyst layer laminated membrane obtained in Reference Example 1. Hot pressing was performed at a pressing temperature of 100°C, pressing pressure of 7.5 kN, and pressing time of 2 minutes to produce a laminate in which the conductive layer (B-1) was formed on both sides of the catalyst layer laminated membrane.

Subsequently, the laminates obtained according to Example 1 were disposed in a manner such that the conductive layer (A-1) side surface of each laminate was in contact with each of the conductive layers (B-1) of the laminate produced, and the laminates were stacked to produce the solid polymer fuel cell of Example 8.

### <Example 9>

The membrane-electrode assembly of Example 9 was produced in the same manner as in Example 8 except that the laminate produced in Example 2 was used in place of the laminate produced in Example 1.

### <Example 10>

The solid polymer fuel cell of Example 10 was produced in the same manner as in Example 8 except that the laminate produced in Example 3 was used in place of the laminate produced in Example 1.

### <Example 11>

The membrane-electrode assembly of Example 11 was produced in the same manner as in Example 8 except that the laminate produced in Example 4 was used in place of the laminate produced in Example 1.

### <Example 12>

The conductive layer A-forming paste composition, which was the same as the paste in Example 3, was prepared. Regarding the viscosity of the paste composition, the shear viscosity was about 437 mPa·s at a shear rate of 1,000 (1/s). The conductive layer A-forming paste composition was applied to a polyethylene terephthalate (PET) film including the release layer, using an applicator to a thickness of about 50 µm. Immediately thereafter, hot air set at 80°C was applied to the coating side for drying to produce a conductive layer (A-3). In the conductive layer (A-3), the polymer (polymer (2)) was present with a higher density at the surface in contact with the PET film.

Subsequently, the laminate of Example 12 was produced in the same manner as in Example 3 except that the conductive layer (A-2) was detached from the PET film including the release layer, the surface of the conductive layer (A-2) having the polymer (polymer (2)) with a higher density was brought into contact with the surface of a metal separator to which gold had been applied after the formation of a flow channel of a stainless steel plate, and hot-pressing was performed at a pressing temperature of 150°C and a pressing pressure of 25 kN, for a pressing time of 2 minutes.

### <Comparative Example 5>

The conductive layer (A-3) was produced in the same manner as in Example 12. The laminate of Comparative Example 5 was produced in the same manner as in Example 3 except that the conductive layer (A-3) was detached from the PET film including the release layer, the surface opposite to the surface of the conductive layer (A-3) having the polymer (polymer (2)) with a higher density was brought into contact with the surface of a metal separator obtained by applying gold after the formation of a flow channel on a stainless steel substrate, and hot-pressing was performed at a pressing temperature of 150°C and a pressing pressure of 25 kN, for a pressing time of 2 minutes.

### <Example 13>

The conductive layer (A-3) was produced in the same manner as in Example 12.

Subsequently, the conductive layer (A-3) was detached from the PET film including the release layer, the surface of the conductive layer (A-3) having the polymer (polymer (2)) with a higher density was brought into contact with the surface of carbon paper (carbon paper TGPH090 produced by Toray Industries. Inc.), and hot-pressing was performed at a pressing temperature of 150°C and a pressing pressure of 25 kN, for a pressing time of 2 minutes, thus obtaining the laminate of Example 13.

### <Comparative Example 6>

The conductive layer (A-3) was produced in the same manner as in Example 12.

Subsequently, the conductive layer (A-3) was detached from the PET film including the release layer, the surface that was opposite to the surface of the conductive layer (A-3) having the polymer (polymer (2)) with a higher density was brought into contact with the surface of carbon paper (carbon paper TGPH090 produced by Toray Industries. Inc.), and hot-pressing was performed at a pressing temperature of 150°C and a pressing pressure of 25 kN, for a pressing time of 2 minutes, thus obtaining the laminate of Comparative Example 6.

### <Conductive Layer A Evaluation Test 1>

The conductive layer (A-1) obtained in Example 1, the conductive layer (A-2) obtained in Example 3, and the conductive layer (A-3) obtained in Example 12 were each detached from the PET film including the release layer. The layers were observed by energy dispersion X-ray analysis. Table 1 shows the results. As the analysis device, an EX-23000BU energy dispersion X-ray analysis device produced by JEOL Ltd., was used. The results confirmed that the density of the F element contained in the polymer was different between the front surface and the back surface of each conductive layer; and the polymer was segregated between the front surface and the back surface of the conductive layer A. In Table 1, "PET film contact surface" means the surface that was in contact with the PET film before the PET film was detached from the conductive layer A, and "PET film non-contact surface" means the surface opposite to the PET film contact surface.

**Table 1**

| Evaluation element | Conductive layer (A-1) | | Conductive layer (A-2) | | Conductive layer (A-3) | |
|---|---|---|---|---|---|---|
| | PET film non-contact surface | PET film contact surface | PET film non-contact surface | PET film contact surface | PET film non-contact surface | PET film contact surface |
| C | 83.77 | 82.09 | 92.95 | 83.47 | 88.46 | 87.08 |
| F | 14.74 | 15.75 | 2.69 | 16.53 | 9.15 | 11.34 |

### <Laminate Evaluation Test 2>

### 1. Adhesion

Using a medium-temperature press device (produced by Tester Sangyo, Co., Ltd.), adhesion between the conductive layer (A-1), (A-2), or (A-3) and the metal separator or conductive porous substrate in each of the laminates (50 x 50 mm²) obtained in Examples 1 to 6 and 12 to 13, and Comparative Examples 1 to 6, was measured.

Adhesion was subjectively evaluated as to whether layers were adhered together in a manner such that one layer was not detached from another layer. Specifically, adhesion was rated A or B.
A: Strongly adhered and difficult to detach layers with hands.
B: Easy to detach layers with hands, or no adhesion observed. Table 2 shows the results.

**Table 2**

| | Adhesion state |
|---|---|
| Example 1 | A |
| Example 2 | A |
| Example 3 | A |
| Example 4 | A |
| Example 5 | A |
| Example 6 | A |
| Example 12 | A |
| Example 13 | A |
| Comp. Exam. 1 | B |
| Comp. Exam. 2 | B |
| Comp. Exam. 3 | B |
| Comp. Exam. 4 | B |
| Comp. Exam. 5 | B |
| Comp. Exam. 6 | B |

## Claims

1. A laminate comprising a conductive layer A formed on a support,
the conductive layer A containing a conductive carbon material and a polymer,
the polymer in the conductive layer A being present with a higher density at the surface in contact with the support than at the opposite side surface thereof.

2. A laminate comprising a conductive layer B formed on the surface of the conductive layer A opposite to the surface of the support side of the conductive layer A in the laminate according to claim 1, the conductive layer B containing a conductive carbon material and a polymer.

3. The laminate according to claim 1 or 2, wherein the support is a separator or a conductive porous substrate.

4. The laminate according to any one of claims 1 to 3, wherein the separator comprises at least one member selected from the group consisting of metals such as stainless steel, copper, titanium, aluminum, rhodium, tantalum, and tungsten, or alloys including at least one member of the metals; graphite; and carbon compounds in which carbon is added into resin, and
the conductive porous substrate is carbon paper, carbon cloth, or carbon felt.

5. The laminate according to any one of claims 2 to 4 satisfying one of the following conditions (A) and (B):
(A) the polymer in the conductive layer B is present with a higher density at the surface not in contact with the conductive layer A than at the surface in contact with the conductive layer A, and
(B) the polymer in the conductive layer B is present with a higher density at the surface in contact with the conductive layer A than at the surface not in contact with the conductive layer A.

6. A method for producing a laminate comprising a conductive layer A formed on a support, the method comprising the steps of:
(I) applying a conductive layer A-forming paste composition containing a conductive carbon material and a polymer to a substrate, and drying the composition to produce the conductive layer A having a polymer with a higher density at the surface of the substrate side than at the surface not in contact with the substrate, and
(II) detaching the conductive layer A produced in (I) above from the substrate, disposing the conductive layer A on the support in a manner such that the polymer contained in the conductive layer A is present with a higher density at the surface in contact with the support than at the opposite side surface thereof, and bonding the conductive layer A and the support.

7. A method for producing a laminate comprising a support, a conductive layer A, and a conductive layer B, the conductive layer A being formed on the support, and the conductive layer B being formed on the conductive layer A,
the method comprising the steps of:
(I) applying a conductive layer A-forming paste composition containing a conductive carbon material and a polymer to a substrate, and drying the composition to produce the conductive layer A having a polymer with a higher density at the surface of the substrate side than at the surface not in contact with the substrate,
(I') applying a conductive layer B-forming paste composition containing a conductive carbon material and a polymer to a substrate, and drying the composition to produce the conductive layer B,
(II') detaching the conductive layer A produced in (I) above from the substrate, and disposing the conductive layer A on the support in a manner such that the polymer contained in the conductive layer A is present with a higher density at the surface in contact with the support than at the opposite side surface thereof,
(III) detaching the conductive layer B produced in (I') above from the substrate, and disposing the conductive layer B on the conductive layer A, and
(IV) bonding the support, conductive layer A, and conductive layer B.

8. A membrane-electrode assembly for batteries comprising a catalyst layer laminated membrane and at least one laminate according to claim 1,
the catalyst layer laminated membrane comprising a catalyst layer, an electrolyte membrane, and a catalyst layer that are sequentially laminated,
the laminate being disposed on one side or both sides of the catalyst layer laminated membrane,
the laminate being stacked on the catalyst layer laminated membrane in a manner such that the conductive layer A is in contact with the catalyst layer.

9. A membrane-electrode assembly for batteries comprising a catalyst layer laminated membrane and at least one laminate according to any one of claims 2 to 5,
the catalyst layer laminated membrane comprising a catalyst layer, an electrolyte membrane, and a catalyst layer that are sequentially laminated,
the laminate being disposed on one side or both sides of the catalyst layer laminated membrane,
the laminate being stacked on the catalyst layer laminated membrane in a manner such that the conductive layer B is in contact with the catalyst layer.

10. A cell comprising the membrane-electrode assembly for batteries according to claim 8 or 9.
